# EUROPÄISCHE PATENTSCHRIFT

(11) **EP 1 205 349 B1**
(45) Veröffentlichungstag und Bekanntmachung des Hinweises auf die Patenterteilung: **03.12.2008**
(21) Anmeldenummer: 01120374.2
(22) Anmeldetag: 25.08.2001
(51) Int. Cl.: B60Q 1/14

(54) **Lenkstockschalter für Kraftfahrzeuge**
Steering column switch
Interrupteur de colonne de direction

(30) Priorität: 10.11.2000 DE 10056664
(43) Veröffentlichungstag der Anmeldung: 15.05.2002
(73) Patentinhaber: Valeo Schalter und Sensoren GmbH, 74321 Bietigheim-Bissingen (DE)
(72) Erfinder: Hecht, Walter, 74321 Bietigheim-Bissingen (DE); Lipfert, Reiner, 74076 Heilbronn (DE); Klein, Rudolf, 74348 Lauffen a.N. (DE)
(74) Vertreter: Dreiss, Fuhlendorf, Steimle & Becker

(56) Entgegenhaltungen:
- EP-A1- 0 160 905
- EP-A2- 0 818 352
- DE-A1- 2 228 393
- DE-A1- 2 835 256
- DE-A1- 3 129 004
- DE-A1- 19 706 546
- FR-A1- 2 796 201
- US-A- 4 710 599

## Beschreibung

Die Erfindung betrifft einen Lenkstockschalter für Kraftfahrzeuge mit wenigstens einem Schalthebel, mit einer Schaltereinheit im Bereich des freien Endes des Schalthebels, die wenigstens ein Betätigungselement aufweist, die über das Betätigungselement betätigbare Schaltelemente aufweist und die eine Schaltkontakte aufweisende Schalterplatine aufweist, wobei die Schaltelemente mit den Schaltkontakten zusammenwirken.

Derartige Lenkstockschalter für Kraftfahrzeuge sind in vielfältiger Art und Weise bekannt. Je nach der zu bewältigenden Schaltaufgabe der im Bereich des freien Endes des Schalthebels angeordneten Schaltereinheit ist diese verschiedenartig ausgebildet. Als Schaltaufgaben einer solchen Schaltereinheit kommen beispielsweise in Betracht: Betätigung einer Intervallsteuerung beispielsweise eines Frontscheibenwischers, Betätigung einer Wischvorrichtung für eine Heckscheibe, Bedienung eines Tempomaten, Bedienen einer Multifunktionsanzeige o. dgl..

Je nach Ausführungsform des Lenkstockschalters können eine Vielzahl von Betätigungselementen an derartigen Schaltereinheiten vorgesehen sein.

Aus der DE 197 06546 A1 ist ein Lenkstockschalter mit den Merkmalen des Oberbegriffs des Anspruchs 1 bekannt geworden. Einen ähnlichen Lenkstockschalter offenbart die DE 22 28 398 A1.

Der vorliegenden Erfindung liegt die Aufgabe zugrunde, einen Lenkstockschalter der eingangs genannten Art bereitzustellen, bei welchem eine Vielzahl von verschiedenartigen Schaltaufgaben mit einer geringen Anzahl von möglichst universell zu verwendenden Bauteilen möglich ist.

Diese Aufgabe wird mit einem Lenkstockschalter mit den Merkmalen des Anspruchs 1 gelöst. Vorzugsweise sieht hierbei das Trägerbasisteil vier Aufnahmeabschnitte für vier verschiedene Betätigungselemente vor. Dadurch wird vorteilhafterweise erreicht, dass lediglich ein Trägerbasisteil Verwendung findet, unabhängig davon, welche Schaltaufgabe später bei vollständig montiertem Lenkstockschalter zu realisieren ist. Bei mehreren Aufnahmeabschnitten für Betätigungselemente können beispielsweise bei einer einfachen Ausführungsform des Lenkstockschalters lediglich ein, oder auch zwei Aufnahmeabschnitte mit entsprechenden Betätigungselementen bestückt werden. Sind eine Vielzahl von Schaltaufgaben zu realisieren, so können sämtliche, vorzugsweise vier, Aufnahmeabschnitte mit entsprechenden Betätigungselementen bestückt werden. Durch ein derartiges Trägerbasisteil wird die Anzahl der Bauteile des Lenkstockschalters und insbesondere der im Bereich des freien Endes des Schalthebels vorhandenen Schaltereinheit erheblich reduziert. Das Trägerbasisteil ist damit universell für verschiedene Ausführungen des Lenkstockschalters einsetzbar.

Erfindungsgemäß weist der Lenkstockschalter zwei Schalthebel auf, wobei jeder der Schalthebel eine Schalteinheit mit identischem Trägerbasisteil aufweist. Dies hat den Vorteil, dass selbst bei Verwendung von mehreren Schalthebeln und vorzugsweise zwei Schalthebeln die Anzahl der Bauteile durch vorzugsweise identische Trägerbasisteile erheblich reduziert wird.

Die Schaltereinheit, die das Trägerbasisteil, welches wenigstens das eine Betätigungselement samt zugehörigen Schaltelementen und die Schalterplatine umfasst, ist vorzugweise als Baugruppe selbstständig handhabbar. Dies hat den Vorteil, dass die Schaltereinheit je nach zu bewältigender Schaltaufgabe mit einer entsprechenden Anzahl von Betätigungselementen bestückt und vormontiert werden kann. Nach kompletter Vormontage der Schaltereinheit kann diese als selbstständige Baugruppe gehandhabt werden und mit dem Lenkstockschalter bzw. mit dem Schalthebel verbaut werden. Die Montage als auch die Demontage eines derartigen Lenkstockschalters bzw. Schalthebels wird hierdurch wesentlich vereinfacht.

Die Erfindung zeichnet sich ferner dadurch aus, dass der Schalthebel ein Hebelgrundteil und einen Hebeldeckel aufweist, wobei die Schaltereinheit in montiertem Zustand an dem Hebelgrundteil befestigt ist und von dem Hebeldeckel abgedeckt wird. Dies hat insbesondere den Vorteil, dass bei einer Demontage des Lenkstockschalters bzw. des Schalthebels bei Abnahme des Hebeldeckels die Schaltereinheit nicht verloren gehen kann bzw. komplett montiert bleibt. Die Schaltereinheit kann hierbei insbesondere mittels einer Schnapp-Rastverbindung an dem Hebelgrundteil befestigt sein.

Um eine weitere Bauteileinsparung zu erreichen, kann erfindungsgemäß ebenso vorgesehen sein, dass das wenigstens eine Betätigungselement Aufnahmeabschnitte für die Schaltelemente aufweist. Diese Aufnahmeabschnitte können insbesondere einen Zylinder zur Aufnahme einer Druckfeder mit einer Kontaktbrücke aufweisen. Über die Kontaktbrücke können dann die an der Schalterplatine vorhandenen Schaltkontakte kontaktiert werden.

Eine andere, ebenfalls bevorzugte Ausführungsform der Erfindung sieht vor, dass wenigstens ein und vorzugsweise zwei Aufnahmeabschnitte für die Betätigungselemente als Aufnahmezapfen ausgebildet sind. Vorzugsweise weisen die Aufnahmezapfen Rastabschnitte zur hinterrastenden Halterung der jeweiligen Betätigungselemente auf, wobei die derart gehalterten Betätigungselemente vorzugsweise als um den jeweiligen Aufnahmezapfen drehbar gelagerte Drehbetätigungselemente ausgebildet sind. Bei mehreren derartigen Aufnahmezapfen kann je nach Schaltaufgabe lediglich nur ein Aufnahmezapfen, oder auch mehrere mit entsprechenden Drehbetätigungselementen bestückt werden.

Bei einer weiteren Ausführungsform der Erfindung weist das Trägerbasisteil an insbesondere seiner Unterseite einen Aufnahmeabschnitt für ein Druckbetätigungselement auf. Ein derartiges Druckbetätigungselement kann beispielsweise ein Reset-Betätigungselement für eine Multifunktionsanzeige sein.

Erfindungsgemäß ist weiterhin denkbar, dass das Trägerbasisteil an insbesondere dem freien Ende des Schalthebels einen Aufnahmeabschnitt für insbesondere ein Wippbetätigungselement aufweist. Ein derartiges Wippbetätigungselement kann beispielsweise ein Steuerbetätigungselement zur Steuerung einer Multifunktionsanzeige sein. Weiterhin ist denkbar, dass ein derartiges Wippbetätigungselement zur Steuerung eines Tempomats Verwendung findet.

Bei einer weiteren Ausführungsform der Erfindung ist vorgesehen, dass das Trägerbasisteil Rastvorgaben für Raststellungen des wenigstens einen Betätigungselements aufweist. Über derartige Rastvorgaben, die als Rastkonturen oder auch als Raststege ausgebildet sein können, wird gewährleistet, dass das jeweilige Betätigungselement in seiner Schaltstellung verharrt. Dadurch, dass die Rastvorgaben Bestandteil des Trägerbasisteils sind, entfallen ebenfalls zusätzliche Bauteile.

Dabei insbesondere vorgesehen sein, dass das wenigstens eine Betätigungselement eine die Rastvorgabe beaufschlagende Federhülse aufweist. Über eine derartige Federhülse wird ein funktionssicheres Verharren der jeweiligen Betätigungselemente in ihrer definierten Schaltstellung gewährleistet.

Vorzugsweise ist eine derartige Rastvorgabe als zick-zack-artiger Steg ausgebildet. Ein derartiger Steg lässt sich ohne weiteres an das Trägerbasisteil beispielsweise anformen.

Bei einer besonders bevorzugten Ausführungsform ist vorgesehen, dass wenigstens eine Rastvorgabe beidseitig zugänglich und beidseitig von Federhülsen beaufschlagbar ist. Vorzugsweise ist das Trägerbasisteil einstückig aus Kunststoff spritzgegossen. Ein derartiges Trägerbasisteil kann den im vorhergehenden geschilderten Anforderungen auf besonders geeignete Art und Weise gerecht werden.

Weiterhin ist erfindungsgemäß denkbar, dass an der Schalterplatine ein Kabelsatz angeordnet ist, der innerhalb des Schalthebels verläuft. Ein derartiger Kabelsatz kann vorteilhafterweise vor der Montage der Schaltereinheit an der Schalterplatine angeordnet sein. Dies trägt zu einer Vereinfachung der Endmontage des Lenkstockschalters bei.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: einen erfindungsgemäßen Lenkstockschalter in Vorderansicht,
- Figur 2: verschiedene Möglichkeiten der Anordnung von Betätigungselementen an den Schalthebeln des Lenkstockschalters,
- Figur 3: den Schalthebel gemäß Figur 1 in Seitenansicht,
- Figur 4: eine Draufsicht auf den Schalthebel gemäß Figur 3 ohne Hebeldeckel,
- Figur 5: die Seitenansicht des Schalthebels gemäß Figur 4,
- Figur 6: das Grundteil eines Schalthebels gemäß Figur 3 in perspektivischer Ansicht,
- Figur 7: das Grundteil gemäß Figur 6 mit einer Schaltereinheit,
- Figur 8 und 9: verschiedene perspektivische Ansichten eines Trägerbasisteils einer Schaltereinheit gemäß Figur 7,
- Figur 10, 11, 12: verschiedene Ansichten des Trägerbasisteils gemäß Figur 8 und 9,
- Figur 13: das bestückte Trägerbasisteil gemäß Figur 8 mit verschiedenen Betätigungselementen,
- Figur 14: eine Schalterplatine für eine Schaltereinheit gemäß Figur 13.

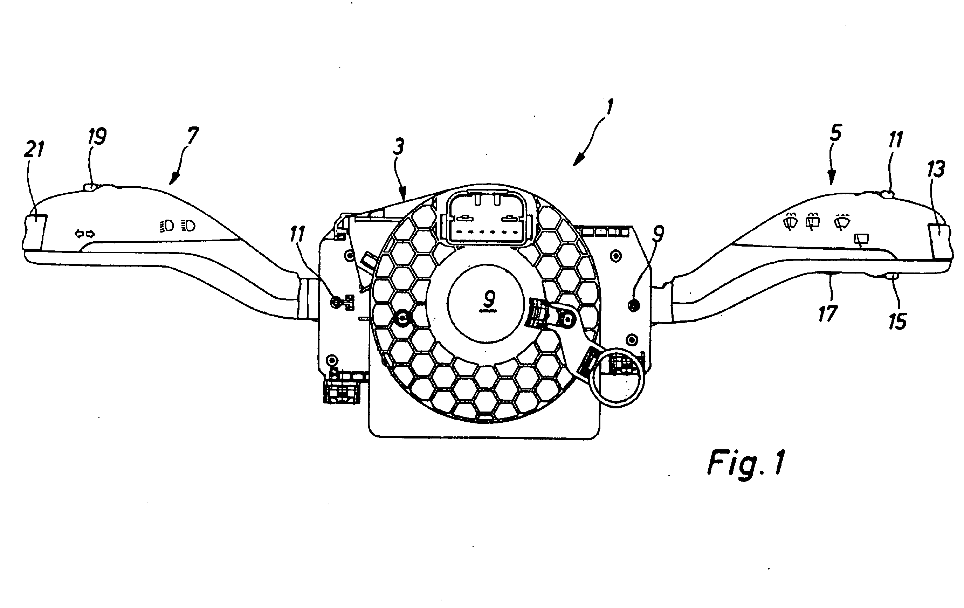

Der in Figur 1 dargestellte Lenkstockschalter 1 für Kraftfahrzeuge umfasst im Wesentlichen ein Schaltergehäuse 3 sowie zwei Schalthebel 5 und 7. Das Schaltergehäuse 3 weist einen zentralen Durchbruch 9 auf, in welchem bei montiertem Lenkstockschalter die Lenksäule des Kraftfahrzeugs angeordnet ist. Über die beiden Schalthebel 5 und 7 werden verschiedene in dem Schaltergehäuse 3 vorhandene Schaltereinheiten betätigt. So wird beispielsweise durch Verschwenken des Halthebels 5 um eine Achse 9 die Scheibenwischvorrichtung an der Frontscheibe des Fahrzeugs betätigt. Über Verschwenken des Schalthebels 5 senkrecht zur Ebene der Zeichnung kann beispielsweise eine Spritzwassereinrichtung zur Reinigung der Fahrzeugfrontscheibe betätigt werden.

Durch Verschwenken des Schalthebels 7 um eine Achse 11 werden an dem Fahrzeug vorhandene Blinkeinrichtungen gesetzt. Durch Schwenken des Halthebels 7 senkrecht zur Ebene der Zeichnung kann über eine entsprechende, in dem Schaltergehäuse 3 vorhandene Schaltereinheit, das Aufblendlicht gesetzt werden.

Die beiden Schalthebel 5, 7 sehen in dem Bereich ihrer freien Enden verschiedene Betätigungselemente 11, 13, 15, 17, 19, 21 vor. Über diese Betätigungselemente 11 bis 21 ist je eine in den Schalthebeln 5, 7 vorhandene Schaltereinheit betätigbar.

Das Betätigungselement 13 ist gemäß der Ausführungsform nach Figur 1 zur Betätigung eines Cursers einer Multifunktionsanzeige vorgesehen. Betätigungselement 17 ist eine Reset-Taste, die über die Multifunktionsanzeige wiedergegebene Daten rücksetzt. Über das Betätigungselement 15 kann ein Heckscheibenwischer betätigt werden. Mittels dem Betätigungselement 11 kann die Frequenz einer Intervallwischung der Frontscheibenwischer verstellt werden.

Mit dem Betätigungselement 19 des Schalthebels 7 kann ein Tempomat betätigt werden. Das Betätigungselement 21 ist ebenfalls für die Betätigung bzw. für die Steuerung eines Tempomats vorgesehen.

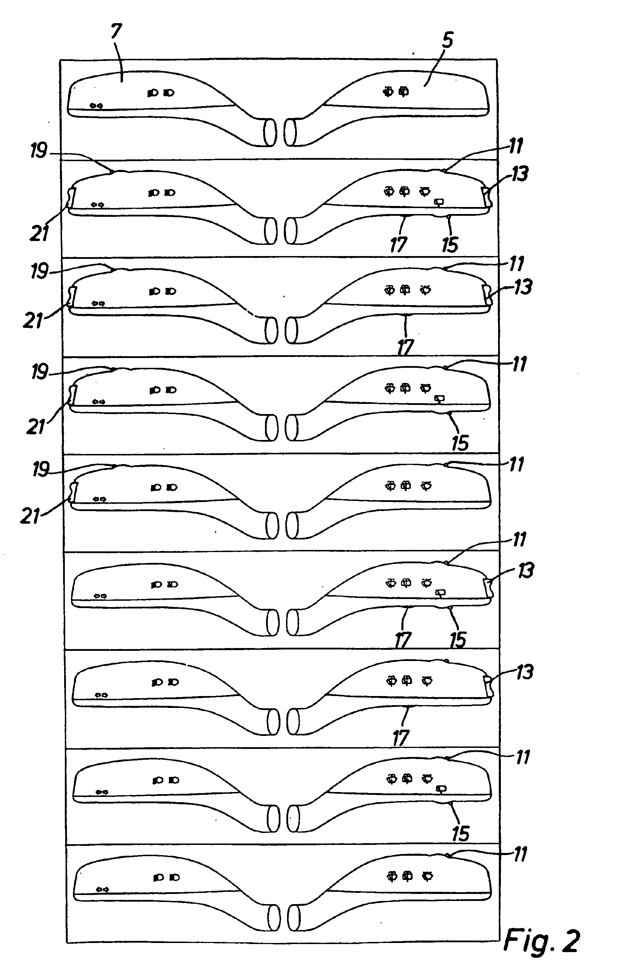

Figur 2 zeigt verschiedene Ausführungsformen der Schalthebel 5 und 7. Je nach Anforderungsprofil und Schaltaufgabe weisen die jeweiligen Schalthebel 5, 7 verschiedene Betätigungselemente auf. In der in Figur 2 an erster Stelle dargestellten nicht erfindungsgemäss Ausführungsform weisen die beiden Schalthebel 5, 7 keinerlei Betätigungselemente auf. Die an zweiter Stelle gezeigte erfindungsgemäss Ausführungsform entspricht der Ausführungsform gemäß Figur 1. Aus Figur 2 wird deutlich, dass eine Vielzahl von verschiedenen Ausführungsformen der Schalthebel 5, 7 zu realisieren sind.

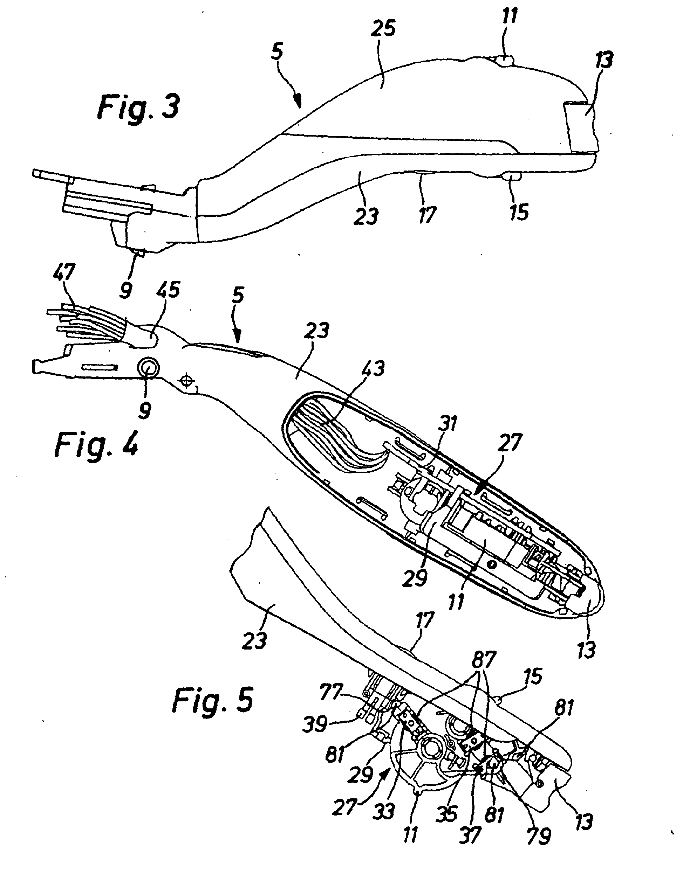

Figur 3 zeigt den Schalthebel 5 gemäß Figur 1 als Einzelteildarstellung. Dabei sind die Betätigungselemente 11, 13, 15, 17 deutlich zu erkennen. Weiterhin ist Figur 3 zu entnehmen, dass der Schalthebel 5 im Wesentlichen ein zweiteiliges Gehäuse aufweist. Das Gehäuse umfasst ein Hebelgrundteil 23 sowie einen Hebeldeckel 25.

In Figur 4, die den Schalthebel 5 in Draufsicht ohne Hebeldeckel 25 zeigt, ist eine Schaltereinheit 27 zu erkennen. Die Schaltereinheit 27 umfasst ein Trägerbasisteil 29, an dem die Betätigungselemente 11, 13, 15, 17 angeordnet sind, sowie eine Schalterplatine 31. Weiterhin sind über die Betätigungselemente 11, 13, 15, 17 betätigbare Schaltelemente 33, 35, 37, 39, 41 vorhanden, die mit an der Schalterplatine 31 vorhandenen Schaltkontakten zusammenwirken. Die Schaltkontakte 35 - 41 sind insbesondere in Figur 5 zu erkennen, wobei in Figur 5 der Übersichtlichkeithalber die Schalterplatine 31 nicht dargestellt ist.

In Figur 4 ist außerdem ein Kabelstrang 43 dargestellt, der an der Schalterplatine 31 angelötet ist. Der Kabelstrang 43 verläuft innerhalb des hohl ausgebildeten Hebelgrundteils. An dem dem Schaltergehäuse 3 zugewandten Ende des Schalthebels 5 weist der Schalthebel 5 eine Austrittsöffnung 45 auf, durch welche der Kabelstrang 43 hindurchgeführt wird. An den freien Enden 47 des Kabelstrangs 43 kann ein Steckerelement angeordnet sein, um den Kabelstrang 43 mit beispielsweise einer zentralen Steuereinheit zu verbinden.

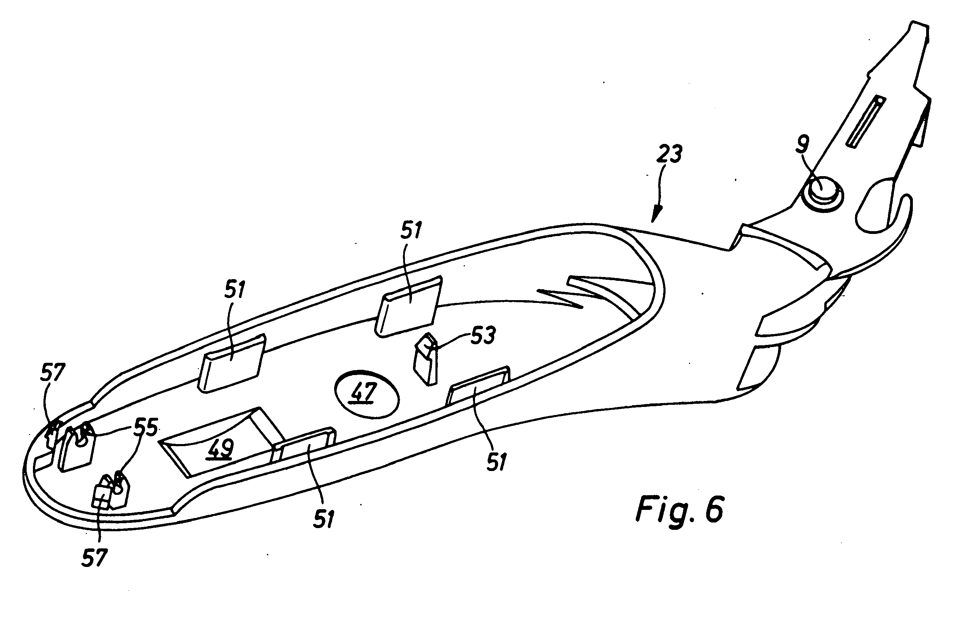

Figur 6 zeigt das Hebelgrundteil 23 in perspektivischer Ansicht als Einzelteildarstellung. Deutlich zu erkennen ist, dass das Hebelgrundteil 23 an seiner Unterseite zwei Öffnungen 47 und 49 aufweist. In vollständig montiertem Zustand durchgreift das Betätigungselement 17 die Öffnung 47. Damit kann das Betätigungselement 17 von einer den Lenkstockschalter betätigenden Person betätigt werden. Durch die Öffnung 49 greift in vollständig montiertem Zustand das Betätigungselement 15. Weiterhin sieht das Hebelgrundteil 23 verschiedene Führungs- und Rast- bzw. Schnappabschnitte 51, 53, 55 vor. Über diese Abschnitte 53, 55 wird das Trägerbasisteil 29 an dem Hebelgrundteil 23 gehaltert. Über die Abschnitte 51 wird das Trägerbasisteil 29 bei der Monatge in die Montageposition geführt. Weiterhin sind an dem Hebelgrundteil 23 Schnappnasen 57 vorhanden, mittels welchen der Hebeldeckel 25 an dem Hebelgrundteil 23 gehaltert wird.

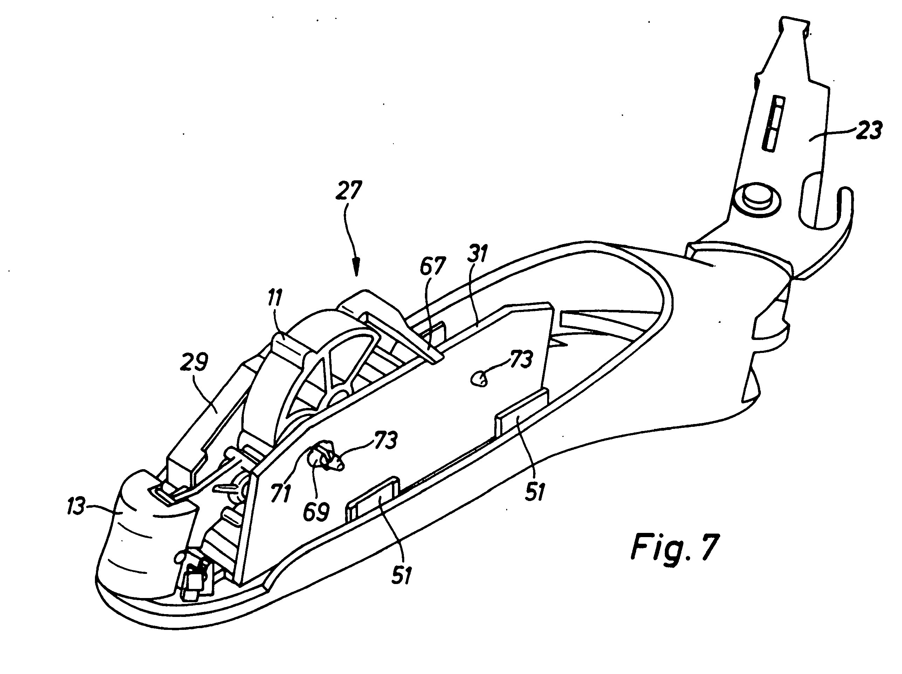

Figur 7 zeigt die Schaltereinheit 27, wie sie in das Hebelgrundteil 23 eingesetzt ist. Deutlich zu erkennen ist die Schaltplatine 31, sowie die beiden Betätigungselemente 11 und 13. Die Schaltereinheit 27 ist hierbei mittels den Führungs- und Schnappabschnitten 53, 55 an dem Hebelgrundteil 23 gehaltert.

Die in Figur 7 dargestellte Schaltereinheit 27, die im Wesentlichen das Trägerbasisteil 29, die Betätigungselemente 11, 13, 15, 17 sowie verschiedene Schaltelemente 33, 35, 37 und die Schalterplatine 31 umfasst, ist als Baugruppe selbstständig handhabbar. Dies hat den Vorteil, dass die Schaltereinheit 27 je nach Anforderung und damit zum bewältigender Schaltaufgabe vormontiert werden kann. Eine derart vormontierte Schaltereinheit 27 kann dann in einem nächsten Arbeitsschritt in den Schalthebel 5 bzw. das Hebelgrundteil 23 eingesetzt werden. Aufgrund der Schnapp- und Führungsabschnitte 53, 55 entfallen Befestigungselemente wie beispielsweise Schrauben zur Halterung der Schaltereinheit 27.

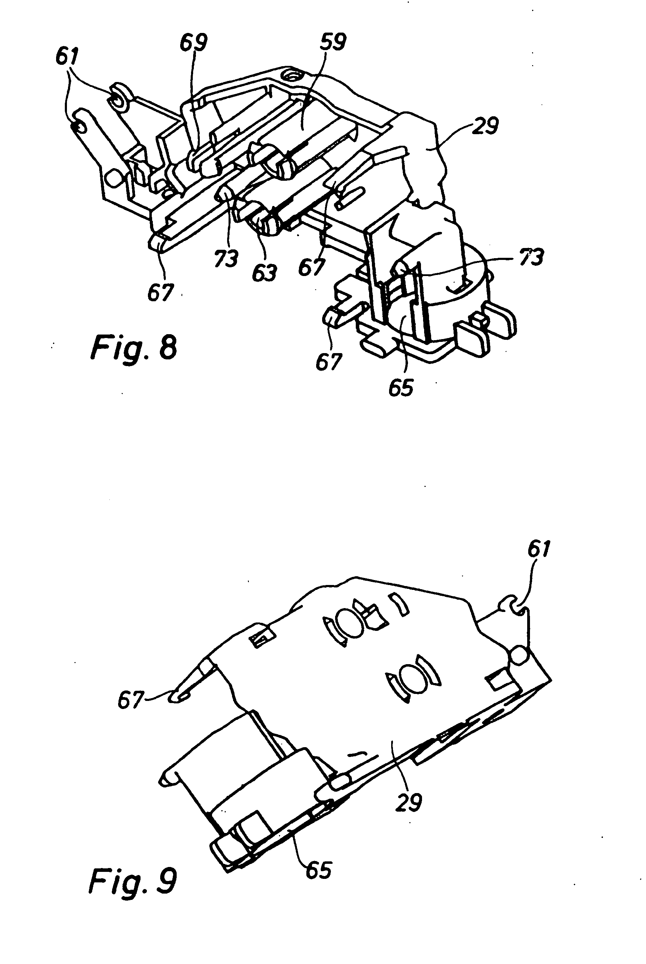

Das in den Figuren 8 - 12 dargestellte Trägerbasisteil 29 weist verschiedene Aufnahmeabschnitte 59, 61, 63, 65 für die Betätigungselemente 11, 13, 15, 17 bzw. 19, 21 auf. Das Trägerbasisteil 29 hat hierbei den entscheidenden Vorteil, dass es in dem Schalthebel 5 als auch in dem Schalthebel 7 verwendet werden kann. Je nach zu lösender Schaltaufgabe werden die Aufnahmeabschnitte 59, 61, 63, 65 mit entsprechenden Betätigungselementen 11, 13, 15, 17 bzw. 19, 21 bestückt. Dies hat den Vorteil, dass unter Verwendung von lediglich ein und demselben Trägerbasisteil 29 alle in Figur 2 dargestellten Schaltaufgaben realisierbar sind. Denkbar ist auch, dass das Trägerbaisteil 21 für den Schalthebel 5 und den Schalthebel 7 weitgehend identisch ist. Insbesondere können die Trägerbaisteile eine unterschiedliche Rastkontur zur Halterung an dem jeweiligen Schalthebel 5, 7 aufweisen.

Die beiden Aufnahmeabschnitte 59 und 63 sind als Aufnahmezapfen ausgebildet. Hierbei weisen sie an ihrer freien Stirnseite Rastabschnitte zur hinterrastenden Halterung der Betätigungselemente 11, 15, bzw. 19 auf. Die derart gehalterten Betätigungselemente 11, 15 bzw. 19 sind um den jeweiligen Aufnahmezapfen 59, 63 drehbar gelagert und somit als Drehbetätigungselemente ausgebildet.

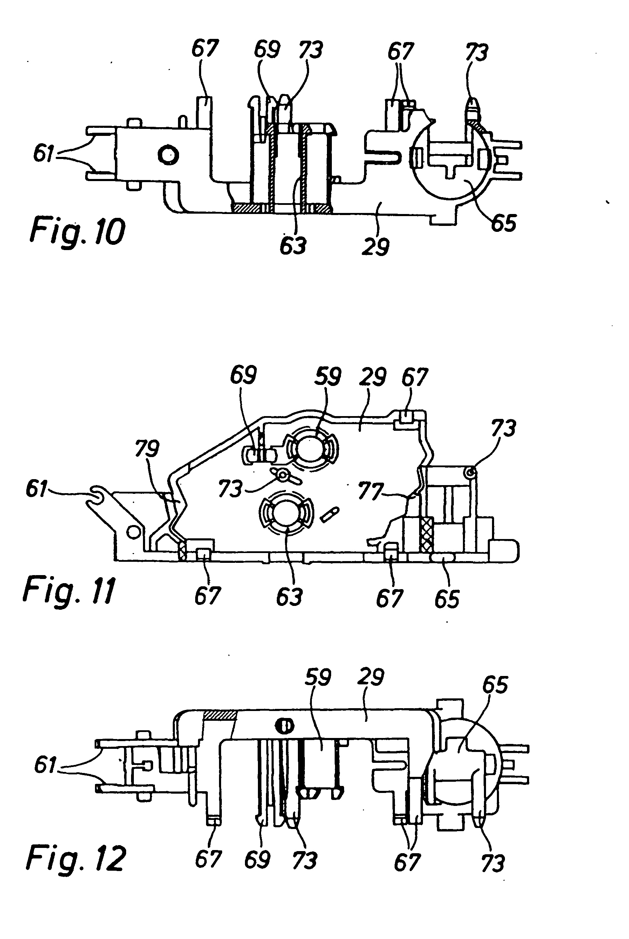

Aus den Figuren 8, 9 und insbesondere aus Figur 10 ist deutlich zu erkennen, dass das Trägerbasisteil 29 an seiner Unterseite den Aufnahmeabschnitt 65 für das Druckbetätigungselement 17 aufweist. Das Trägerbasisteil 29 weist weiterhin den Aufnahmeabschnitt 61 auf, der zur Aufnahme des als Wippbetätigungselement ausgebildeten Betätigungselements 13 bzw. 21 vorgesehen ist. Die Wippbetätigungselemente 13, 21 sind hierbei über Rastnasen in die Aussparungen der Aufnahmeabschnitte 61 einschnappbar.

Wird das in den Figuren 8 bis 12 dargestellte Trägerbasisteil 29 in den Schalthebel 5 gemäß Figur 1 eingebaut, so wird es mit den vier Betätigungselementen 11, 13, 15 und 17 bestückt. Erfolgt der Einbau des Basisträgerteils 29 in den Schalthebel 7 gemäß Figur 1, so wird das Trägerbasisteil 29 mit lediglich zwei Betätigungselementen, nämlich den Betätigungselementen 19 und 21 bestückt.

Zur Halterung der Schalterplatine 31 weist das Betätigungselement 29 verschiedene die Schalterplatine 31 hinterrastenden Rastarme 67, 69 mit daran angeordneten Rastnasen auf. Die Rastarme 67 umgreifen hierbei die freien Kanten der Schalterplatine 31. Der Rastarm 69, der als Doppelrastarm ausgebildet ist, greift im montierten Zustand in eine an der Schalterplatine 31 vorhandene Rastaussparung 71 ein.

Das Trägerbasisteil 29 sieht weiterhin zwei Zentrierzapfen 73 vor, die zwei Zentrierbohrungen 75 der Schalterplatine 29 durchgreifen.

Durch die Rastarme 67, 69 sowie die Zentrierzapfen 73 und die damit korrespondierenden Zentrierbohrungen 75 wird gewährleistet, dass eine eindeutige und funktionssichere Montage der Schalterplatine 31 an dem Trägerbasisteil erfolgen kann.

In Figur 11 ist deutlich zu erkennen, dass das Trägerbasisteil 29 Rastvorgaben 77 und 79 vorsieht, die in der Ansicht nach Figur 11 als zick-zack-artiger Steg ausgebildet sind. Um die Betätigungselemente 11, 13, 15 in vorgegebenen Raststellungen zu halten, weisen die Betätigungselemente 11, 13, 15 die Rastvorgaben 77 bzw. 79 beaufschlagende Federhülsen 81 auf. Die Federhülsen 81 sind insbesondere in Figur 5 zu erkennen. Die Federhülsen 81 sind hierbei in dafür vorgesehenen Zylindern angeordnet, die in die jeweiligen Betätigungselemente 11, 13, 15 eingeformt sind.

Die Rastvorgabe 79 ist hierbei so ausgebildet, dass sie beidseitig zugänglich und beidseitig von Federhülsen 81 beaufschlagbar ist. Auf der einen Seite der Rastvorgabe 79 wird diese von der Federhülse 81 des Betätigungselements 15 beaufschlagt. Die andere Seite wird von der Federhülse 81 des Betätigungselements 13 beaufschlagt. Damit wird auf besonders vorteilhafte Weise lediglich ein zick-zack-artiger Steg als Rastvorgabe 79 von zwei Betätigungselementen 15, 13 benutzt.

Wie aus den Figuren 9 bis 12 hervorgeht, ist das Trägerbasisteil einstückig ausgebildet und vorzugsweise aus Kunstoff spritzgegossen.

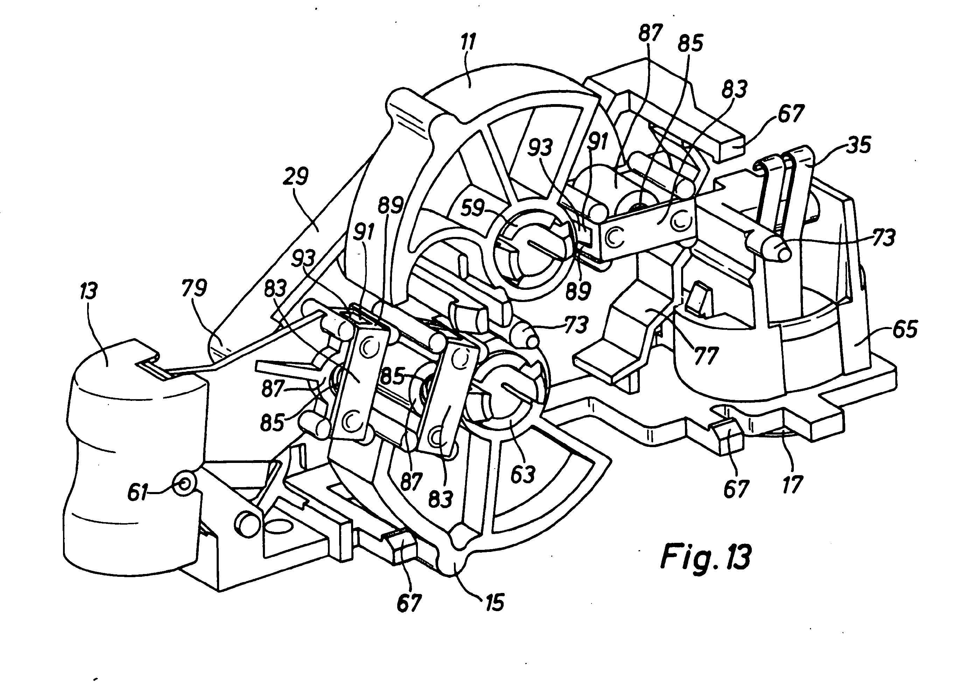

In Figur 13 sind die Schaltelemente 33, 35, 37 gemäß Figur 5 in Form von Kontaktbrücken 83 zu erkennen, die an den Betätigungselementen 11, 13, 15 angeordnet sind. Die Kontaktbrücken 83 werden hierbei mittels Druckfedern 85 druckbeaufschlagt. Die Druckfedern 85 sind in in die Betätigungselemente 11, 13, 15 eingeformten Zylinderaufnahmen 87 angeordnet.

Um zu verhindern, dass die Kontaktbrücken 83 aufgrund der Federbeaufschlagung verloren gehen können, weisen die Kontaktbrücken 83 an ihren Wangen 89 Aussparungen 91 auf. In diese Aussparungen greifen an den Betätigungselementen 11, 13, 15 vorhandene Rastzapfen 93.

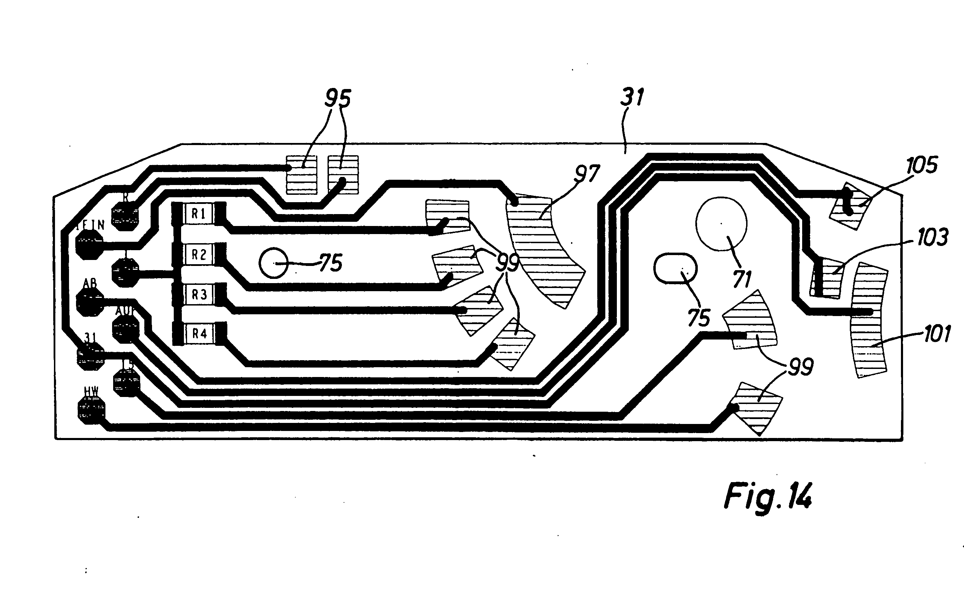

Die Figur 14 zeigt die den Kontaktbrücken 83 zugewandte Seite der Schalterplatine 31. Die Schalterplatine 31 weist hierbei verschiedene Schaltkontakte 95, 97, 99, 101, 103, 105 auf. Die Schaltkontakte 95 wirken bei montierter Schalterplatine 31 mit dem Schalterelement 35 des Betätigungselements 17 zusammen.

Die Schaltkontakte 97 und 99 wirken mit der Kontaktbrücke 83 des Betätigungselements 11 zusammen. Je nach Schaltstellung des Betätigungselements 11 ist eine der vier Schaltkontakte 99 mit dem Schaltkontakt 97 in Kontakt. Die Schaltkontakte 99 wirken mit der Kontaktbrücke 83 des Betätigungselements 15 zusammen. Entsprechend wirken die Schaltkontakte 101, 103, 105 mit der Kontaktbrücke 83 des Betätigungselements 11 zusammen.

## Patentansprüche

1. Lenkstockschalter (1) für Kraftfahrzeuge mit zwei Schalthebel (5, 7) und mit jeweils Schaltereinheit (27) im Bereich des freien Endes des Schalthebels (5, 7), wobei die Schaltereinheiten jeweils
- ein Trägerbasisteil (29) mit wenigstens zwei Aufnahmeabschnitten (59 - 65) für Betätigungselemente (11 - 21) aufweist,
- über die Betätigungselemente (11 - 21) betätigbare Schaltelemente (33 - 41, 83, 85) aufweist, und
- eine Schaltkontakte (95 - 105) aufweisende Schalterplatine (31) aufweist, wobei die Schaltelemente (83) mit den Schaltkontakten (95 - 105) zusammenwirken, wobei jeder Schalthebel (5, 7) ein Hebelgrundteil (23) und einen Hebeldeckel (25) aufweist, wobei die jeweilige Schaltereinheit (27) in montiertem Zustand in den Schalthebel (5) eingesetzt, an dem jeweiligen Hebelgrundteil (23) befestigt und von dem jeweiligen Hebeldeckel (25) abgedeckt ist,
**dadurch gekennzeichnet,**
**dass** jeder der Schalthebel (5, 7) eine Schaltereinheit (27) mit identischem Trägerbasisteil (29) aufweist,
**dass** die Schaltereinheiten (27) der beiden Schalthebel (5, 7) mit voneinander unterschiedlichen Anordnungen von Schaltelementen (33-41, 83, 85) für unterschiedliche Schaltaufgaben bestückt sind und
**dass** je nach Schaltaufgabe wenigstens einer der Aufnahmeabschnitte (59 - 65) des jeweiligen Trägerbasisteils (29) mit einem Betätigungselement (11 - 21) bestückt ist.

2. Lenkstockschalter (1) nach Anspruch 1, **dadurch gekennzeichnet, dass** wenigstens eine Schaltereinheit (27) mit einer entsprechenden Anzahl von Betätigungselementen bestückt und als vormontierte Baugruppe selbständig handhabbar ist.

3. Lenkstockschalter (1) nach Anspruch 1 oder 2, **dadurch gekennzeichnet, dass** das Betätigungselement (11 - 21) Aufnahmeabschnitte (87, 93) für die Schaltelemente (83, 85) aufweist.

4. Lenkstockschalter (1) nach Anspruch 3, **dadurch gekennzeichnet, dass** Aufnahmeabschnitte für die Schaltelemente einen Zylinder (87) zur Aufnahme einer Druckfeder (85) mit einer Kontaktbrücke (83) umfassen.

5. Lenkstockschalter (1) nach einem der vorhergehenden Ansprüche, **dadurch gekennzeichnet, dass** wenigstens ein und vorzugsweise zwei Aufnahmeabschnitte (59, 63) für die Betätigungselemente als Aufnahmezapfen ausgebildet sind.

6. Lenkstockschalter (1) nach Anspruch 5, **dadurch gekennzeichnet, dass** der Aufnahmezapfen (59, 63) Rastabschnitte zur hinterrastenden Halterung des Betätigungselements (11, 15) aufweist, wobei die derart gehalterten Betätigungselemente (11, 15) vorzugsweise als um den jeweiligen Aufnahmezapfen (59, 63) drehbar gelagerte Drehbetätigungselemente ausgebildet sind.

7. Lenkstockschalter (1) nach einem der vorhergehenden Ansprüche, **dadurch gekennzeichnet, dass** das Trägerbasisteil (29) an insbesondere seiner Unterseite einen Aufnahmeabschnitt (65) für ein Druckbetätigungselement (17) aufweist.

8. Lenkstockschalter (1) nach einem der vorhergehenden Ansprüche, **dadurch gekennzeichnet, dass** das Trägerbasisteil (29) an insbesondere dem freien Ende des Schalthebels (5, 7) einen Aufnahmeabschnitt für insbesondere ein Wippbetätigungselement (13,21) aufweist.

9. Lenkstockschalter (1) nach einem der vorhergehenden Ansprüche, **dadurch gekennzeichnet, dass** das Trägerbasisteil (29) Rastvorgaben (77, 79) für Raststellungen des wenigstens einen Betätigungselements (11 - 15, 19, 21) aufweist.

10. Lenkstockschalter (1) nach Anspruch 9, **dadurch gekennzeichnet, dass** das wenigstens eine Betätigungselement (11 - 15, 19, 21) eine die Rastvorgabe (77, 79) beaufschlagende Federhülse (81) aufweist.

11. Lenkstockschalter (1) nach einem der Ansprüche 9 oder 10, **dadurch gekennzeichnet, dass** wenigstens eine Rastvorgabe (77, 79) als zick-zack-artiger Steg ausgebildet ist.

12. Lenkstockschalter (1) nach einem der Ansprüche 9, 10 oder 11, **dadurch gekennzeichnet, dass** wenigstens eine Rastvorgabe (79) beidseitig zugänglich und beidseitig von insbesondere Federhülsen (81) beaufschlagbar ist.

13. Lenkstockschalter (1) nach einem der vorhergehenden Ansprüche, **dadurch gekennzeichnet, dass** das Trägerbasisteil (29) einstückig aus Kunststoff spritzgegossen ist.

14. Lenkstockschalter (1) nach einem der vorhergehenden Ansprüche, **dadurch gekennzeichnet, dass** an der Schalterplatine (31) ein Kabelsatz (43) angeordnet ist, der innerhalb des Schalthebels (5, 7) verläuft.

## Claims

1. Steering column switch (1) for motor vehicles, comprising two switch levers (5, 7) and comprising in each case a switch unit (27) in the region of the free end of the switch lever (5, 7), the switch units each
- having a support base part (29) with at least two receptacle sections (59-65) for actuating elements (11-21)
- having switch elements (33-41, 83, 85) actuatable via the actuating elements (11-21), and
- having a switch circuit board (31) which has switching contacts (95-105), the switch elements (83) cooperating with the switching contacts (95-105), each switch lever (5, 7) having a lever base part (23) and a lever cover (25), the respective switch unit (27) being inserted in the assembled state into the switch lever (5), being fastened to the respective lever base part (23) and being covered by the respective lever cover (25),
**characterized in that** each of the switch levers (5, 7) has a switch unit (27) with identical support base part (29),
**in that** the switch units (27) of the two switch levers (5, 7) are equipped with arrangements of switch elements (33-41, 83, 85) which differ from one another and are intended for different switching tasks and
**in that**, depending on the switching task, at least one of the receptacle sections (59-65) of the respective support base part (29) is equipped with an actuating element (11-21).

2. Steering column switch (1) according to Claim 1, **characterized in that** at least one of the switch units (27) is equipped with a corresponding number of actuating elements and can be handled independently as a preassembled module.

3. Steering column switch (1) according to Claim 1 or 2, **characterized in that** the actuating element (11-21) has receptacle sections (87, 93) for the switch elements (83, 85).

4. Steering column switch (1) according to Claim 3, **characterized in that** receptacle sections for the switch elements comprise a cylinder (87) for receiving a pressure spring (85) with a contact bridge (83).

5. Steering column switch (1) according to any of the preceding claims, **characterized in that** at least one receptacle section (59, 63) and preferably two receptacle sections (59, 63) are formed as receiving pegs for the actuating elements.

6. Steering column switch (1) according to Claim 5, **characterized in that** the receiving peg (59, 63) has locking sections for holding the actuating element (11, 15) by locking behind, the actuating elements (11, 15) held in this manner preferably being in the form of rotating actuating elements mounted so as to be rotatable about the respective receiving peg (59, 63).

7. Steering column switch (1) according to any of the preceding claims, **characterized in that** the support base part (29) has, in particular on its underside, a receptacle section (65) for a pressure actuating element (17).

8. Steering column switch (1) according to any of the preceding claims, **characterized in that** the support base part (29) has, in particular at the free end of the switch lever (5,7), a receptacle section for in particular a rocker actuating element (13, 21).

9. Steering column switch (1) according to any of the preceding claims, **characterized in that** the support base part (29) has lock set points (77, 79) for locking positions of the at least one actuating element (11-15, 19, 21).

10. Steering column switch (1) according to Claim 9, **characterized in that** the at least one actuating element (11-15, 19, 21) has a spring sleeve (81) making contact with the lock set point (77, 79).

11. Steering column switch (1) according to either of Claims 9 or 10, **characterized in that** at least one lock set point (77, 79) is in the form of a zigzag web.

12. Steering column switch (1) according to any of Claims 9, 10 or 11, **characterized in that** at least one lock set point (79) is accessible from both sides and can be contacted on both sides in particular by spring sleeves (81).

13. Steering column switch (1) according to any of the preceding claims, **characterized in that** the support base part (29) is injection moulded as an integral part from plastic.

14. Steering column switch (1) according to any of the preceding claims, **characterized in that** a cable set (43) which runs inside the switch lever (5, 7) is arranged on the switch circuit board (31).

## Revendications

1. Commutateur de colonne de direction (1) pour véhicules automobiles avec deux leviers de commutation (5, 7) et avec respectivement une unité de commutateur (27) au niveau de l'extrémité libre du levier de commutation (5, 7), dans lequel les unités de commutateur présentent respectivement
- une partie de base de support (29) avec au moins deux sections de réception (59 à 65) pour des éléments d'actionnement (11 à 21),
- des éléments de commutation (33 à 41, 83, 85) pouvant être actionnés par des éléments d'actionnement (11 à 21), et
- une platine de commutation (31) présentant des contacts de commutation (95 à 105), dans lequel les éléments de commutation (83) coopèrent avec les contacts de commutation (95 à 105),
dans lequel chaque levier de commutation (5, 7) présente une partie de base de levier (23) et un couvercle de levier (25), dans lequel l'unité de commutation respective (27) est insérée à l'état monté dans le levier de commutation (5), fixée sur la partie de base de levier respective (23) et recouverte par le couvercle de levier respectif (25),
**caractérisé en ce que** chacun des leviers de commutation (5, 7) présente une unité de commutateur (27) avec une partie de base de support (29) identique,
**en ce que** les unités de commutateur (27) des deux leviers de commutation (5, 7) sont équipées d'agencements, différents entre eux, d'éléments de commutation (33 à 41, 83, 85) pour différentes tâches de commutation, et
**en ce qu'**en fonction de la tâche de commutation, au moins l'une des sections de réception (59 à 65) de la partie de base de support (29) respective est munie d'un élément d'actionnement (11 à 21).

2. Commutateur de colonne de direction (1) selon la revendication 1, **caractérisé en ce qu'**au moins une unité de commutateur (27) est équipée d'un nombre correspondant d'éléments d'actionnement et peut être manipulée de façon autonome comme un sous-ensemble préassemblé.

3. Commutateur de colonne de direction (1) selon la revendication 1 ou 2, **caractérisé en ce que** l'élément d'actionnement (11 à 21) présente des sections de réception (87, 93) pour les éléments de commutation (83, 85).

4. Commutateur de colonne de direction (1) selon la revendication 3, **caractérisé en ce que** des sections de réception pour les éléments de commutation comprennent un cylindre (87) pour recevoir un ressort de compression (85) avec un pont de contact (83).

5. Commutateur de colonne de direction (1) selon l'une quelconque des revendications précédentes, **caractérisé en ce qu'**au moins une, et de préférence deux sections de réception (59, 63) pour les éléments d'actionnement sont réalisées comme des chevilles de réception.

6. Commutateur de colonne de direction (1) selon la revendication 5, **caractérisé en ce que** la cheville de réception (59, 63) présente des sections de d'encliquetage pour un maintien à encliquetage arrière de l'élément d'actionnement (11, 15), les éléments d'actionnement (11, 15) ainsi maintenus étant de préférence réalisés comme des éléments d'actionnement rotatif logés de façon rotative autour de la cheville de réception (59, 63) respective.

7. Commutateur de colonne de direction (1) selon l'une quelconque des revendications précédentes, **caractérisé en ce que** la partie de base de support (29) présente en particulier sur son côté inférieur une section de réception (65) pour un élément d'actionnement par pression (17).

8. Commutateur de colonne de direction (1) selon l'une quelconque des revendications précédentes, **caractérisé en ce que** la partie de base de support (29) présente en particulier à l'extrémité libre du levier de commutation (5, 7) une section de réception en particulier pour un élément d'actionnement basculant (13, 21).

9. Commutateur de colonne de direction (1) selon l'une quelconque des revendications précédentes, **caractérisé en ce que** la partie de base de support (29) présente des emplacements prévus pour l'encliquetage (77, 79) pour des positions d'encliquetage dudit au moins un élément d'actionnement (11 à 15, 19, 21).

10. Commutateur de colonne de direction (1) selon la revendication 9, **caractérisé en ce que** ledit au moins un élément d'actionnement (11 à 15, 19, 21) présente une douille à ressort (81) sollicitant l'emplacement prévu pour l'encliquetage (77, 79).

11. Commutateur de colonne de direction (1) selon l'une quelconque des revendications 9 ou 10, **caractérisé en ce qu'**au moins un emplacement prévu pour l'encliquetage (77, 79) est réalisé comme une entretoise en zigzag.

12. Commutateur de colonne de direction (1) selon l'une quelconque des revendications 9, 10 ou 11, **caractérisé en ce qu'**au moins un emplacement prévu pour l'encliquetage (79) est accessible des deux côtés et peut être sollicité des deux côtés, en particulier par des douilles à ressort (81).

13. Commutateur de colonne de direction (1) selon l'une quelconque des revendications précédentes, **caractérisé en ce que** la partie de base de support (29) est moulée par injection d'une seule partie en matière plastique.

14. Commutateur de colonne de direction (1) selon l'une quelconque des revendications précédentes, **caractérisé en ce que** sur la platine de commutateur (31) un jeu de câbles (43) est disposé qui s'étend à l'intérieur du levier de commutation (5, 7).
